# FASCICULE DE BREVET EUROPEEN

(11) **EP 2 109 554 B1**
(45) Date de publication et mention de la délivrance du brevet: **20.06.2012**
(21) Numéro de dépôt: 08761759.3
(22) Date de dépôt: 14.01.2008
(51) Int. Cl.: B60N 2/20, B60N 3/00

(54) **SIEGE DE VEHICULE AUTOMOBILE COMPORTANT UN DOSSIER REPLIABLE COMPRENANT UN ELEMENT FORMANT TABLETTE ET VEHICULE AUTOMOBILE COMPORTANT UN TEL SIEGE**
AUTOMOBILSITZ MIT ZUSAMMENKLAPPBARER LEHNE UND EINEM IN EIN TABLETT UMWANDELBAREN ELEMENT SOWIE AUTOMOBIL MIT EINEM SOLCHEN SITZ
AUTOMOBILE SEAT INCLUDING A FOLDABLE BACK COMPRISING A MEMBER DEFINING A TABLET, AND AUTOMOBILE WITH SUCH SEAT

(30) Priorité: 19.01.2007 FR 0700370
(43) Date de publication de la demande: 21.10.2009
(73) Titulaire: Renault SAS, 92100 Boulogne Billancourt (FR)
(72) Inventeur: CHARPENTIER, Bruno, F-28100 Dreux (FR); RIOU, Jean-Christphe, F-78640 Villiers-Saint-Frederic (FR)
(86) Numéro de dépôt international: PCT/FR2008/000038
(87) Numéro de publication internationale: WO 2008/107531

(56) Documents cités:
- DE-A1- 4 343 242
- DE-A1- 19 854 985
- US-B1- 6 702 375

## Description

La présente invention concerne un siège de véhicule automobile dont le dossier peut se replier sur l'assise de manière à former une tablette.

Le document DE 4 343 242 décrit une tablette, fixée sur un support escamotable, disposé à côté d'un siège de véhicule automobile. Lorsque le support est abaissé, la tablette, qui est articulée en rotation sur un côté du support, autour d'un axe perpendiculaire à ce dernier, peut se déplier et être amenée devant le siège afin de permettre son utilisation par un utilisateur assis sur le siège. Le support peut comporter deux tablettes, articulées chacune d'un côté du support, de manière à pouvoir être utilisées par des utilisateurs assis sur des sièges situés côte à côte. Ce type de dispositif est très encombrant puisqu'il faut prévoir la place de fixer le support de la tablette entre les deux sièges.

Par ailleurs, il est connu d'utiliser la face arrière des dossiers repliables de certains sièges de véhicule automobile en tant que tablette. Ce type de siège comporte une assise, fixée sur le sol du véhicule, et un dossier, qui peut être replié sur l'assise et dont la face arrière comporte un élément formant tablette qui, lorsque le dossier est replié sur l'assise, forme une surface plane, sensiblement parallèle au plancher du véhicule, qui peut faire office de tablette. Ce type de tablette n'est néanmoins pas très ergonomique car la surface de travail offerte reste réduite et éloignée de l'utilisateur assis sur un siège disposé à côté du siège replié. Le document US 6702375, qui est considéré comme l'état de la technique le plus proche, montre un tel siège.

Un but de la présente invention est de proposer un siège de véhicule automobile du type comportant une assise et un dossier, repliable sur l'assise, dont la face arrière comporte un élément formant tablette qui est facilement utilisable par un utilisateur assis à côte de ce siège, lorsque le dossier est replié sur l'assise du siège.

Ce but est atteint au moyen d'un siège de véhicule automobile, comportant une assise, un dossier repliable sur l'assise, qui comporte une face arrière, au moins partiellement recouverte d'un élément formant tablette et qui peut être amené dans une position sensiblement horizontale, lorsque le dossier est replié sur l'assise. Selon l'invention, l'élément formant tablette comporte un plateau tournant, monté pivotant sur la face arrière du dossier, autour d'un premier axe, sensiblement perpendiculaire à la face arrière, de manière à pouvoir être amené dans une position dans laquelle une portion du plateau tournant dépasse latéralement de la face arrière du dossier. Cette portion de tablette dépassant latéralement elle constitue une augmentation de la surface de la face arrière du siège utilisable en tant que tablette. Par ailleurs, sa position latérale la rend très facilement accessible à un utilisateur assis à côté du siège selon la présente invention.

Selon un premier mode de réalisation, le dossier présente un axe longitudinal et une portion formant appui-tête et le premier axe de rotation du plateau tournant est positionné, au niveau de la portion formant appui-tête. Le plateau tournant est ainsi monté pivotant au niveau de la partie avant de l'assise du siège, lorsque le dossier est replié sur l'assise.

Selon un second mode de réalisation, le dossier présente un premier bord relié à l'assise et un axe longitudinal, et le premier axe de rotation du plateau tournant intersecte l'axe longitudinal, à proximité du premier bord du dossier. Lorsque le dossier est replié sur l'assise, le plateau tournant est monté pivotant au niveau de l'arrière de l'assise, ce qui permet, avantageusement, de pouvoir rapprocher aisément le plateau vers l'utilisateur.

L'élément formant tablette peut comporter un logement de rangement, accessible depuis la face arrière du dossier et disposé au moins partiellement sous le plateau tournant. Ce logement peut servir de rangement, par exemple, pour un ordinateur portable qui sera ensuite utilisé sur le plateau tournant, lorsque le dossier est replié sur l'assise du siège.

Ce logement peut être disposé de manière à être accessible par rotation du plateau tournant autour du premier axe de rotation.

Une partie du plateau tournant peut également être montée pivotante autour d'un second axe de rotation, sensiblement parallèle à la face arrière, de manière à pouvoir être soulevée, au-dessus de élément formant tablette de manière à libérer l'accès audit logement de rangement.

Selon un mode de réalisation particulier, le dossier comporte un bâti, l'élément formant tablette comporte un châssis, rigide, qui est fixé sur le bâti dudit dossier et qui supporte le plateau tournant.

La présente invention concerne également un véhicule automobile comportant une rangée d'au moins deux sièges. Selon l'invention, au moins l'un des sièges est un siège selon l'invention.

La rangée de sièges peut comporter au moins trois sièges et le siège selon l'invention peut alors être disposé entre deux sièges.

Selon l'invention, la rangée de sièges est une rangée de sièges avant ou une rangée de sièges arrière. Ainsi le siège selon l'invention peut être utilisé à l'avant d'un véhicule comportant une rangée d'un ou deux sièges, situés à côté du siège du conducteur.

La présente invention, ses caractéristiques et les différents avantages qu'elle procure seront mieux compris à la lecture de la description qui suit de deux modes de réalisation, présentés à titre d'exemples non limitatifs, et qui fait référence aux dessins annexés, sur lesquels :
- la figure 1 représente une vue en perspective de l'arrière d'un premier mode de réalisation du siège de l'invention, lorsque celui-ci est en position dépliée ;
- la figure 2 représente une vue en perspective du premier mode de réalisation de l'invention, le dossier étant replié sur l'assise et le plateau tournant étant pivoté d'un côté du dossier
- la figure 3 représente une vue de dessus d'un second mode de réalisation du siège de l'invention, le dossier étant replié sur l'assise et le plateau tournant étant pivoté d'un côté du dossier ;
- la figure 4 représente une vue en perspective d'une partie du dossier selon une variante de réalisation du second mode de réalisation de l'invention ;
- la figure 5 représente la partie de dossier représentée sur la figure 4, le plateau tournant étant pivoté pour dégager un logement.

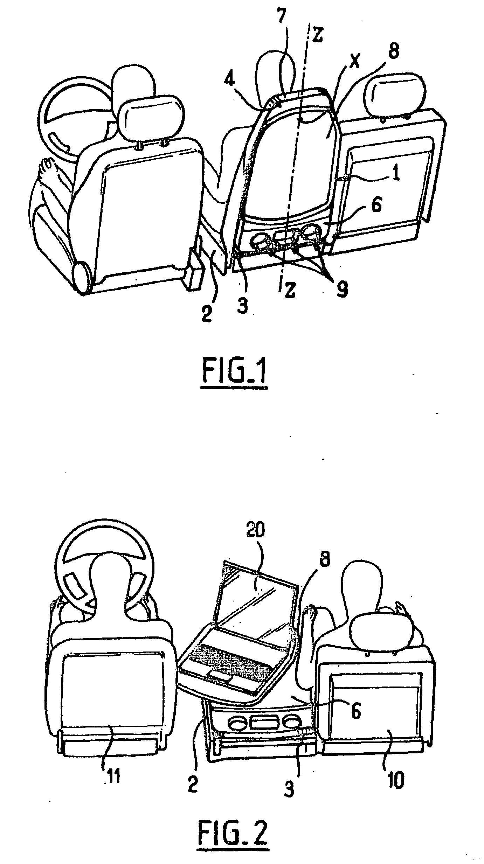

En référence à la figure 1 qui décrit un premier mode de réalisation de l'invention, le siège de l'invention comporte un dossier 1 et une assise 2, fixée sur le sol d'un véhicule automobile et qui est sensiblement perpendiculaire au dossier 1, lorsque ce dernier est dans sa position dépliée, comme représenté sur la figure 1. Le dossier 1 est relié à l'assise 2 au niveau d'un premier bord 3. Le dossier 1 comporte également une portion formant appui-tête 4, qui prolonge verticalement le dossier 1, lorsque celui-ci est dans sa position dépliée. La face arrière du dossier 1, qui est la seule face visible sur la figure 1, correspond à la face du dossier qui ne vient pas en contact avec le dos d'un utilisateur assis sur l'assise 2. Cette face arrière est opposée à la face avant du dossier 1 qui vient en contact avec le dos d'un utilisateur assis sur l'assise 2. Cette face arrière comporte un élément formant tablette 6 sensiblement plan, qui la recouvre entièrement et qui forme une surface rigide, sensiblement plane et continue, qui s'étend du premier bord 3 du dossier 1, qui constitue la jonction entre l'assise 2 et le dossier 1, et le bord libre 7 de la portion formant appui-tête 4. Le dossier, 1 comportant une portion formant appui-tête 4, il est donc plus long qu'un dossier standard, l'élément formant tablette 6 recouvrant totalement la face arrière du dossier 1 (portion formant appui-tête comprise), la surface formant tablette est donc considérablement augmentée par rapport à un siège qui ne comporte pas d'appui-tête intégré au dossier du siège. Par ailleurs, cette grande surface permet l'utilisation d'un vaste plateau tournant.

Comme représenté sur les figures 1 et 2, un plateau tournant 8 est fixé sur l'élément formant tablette 6 du dossier 1. Ce plateau tournant 8 est articulé en rotation autour d'un axe X, perpendiculaire au plan de la face arrière (i.e. à l'élément formant tablette 6). Dans le premier mode de réalisation ici représenté, l'axe de rotation X du plateau tournant 8 est disposé à proximité du bord libre 7 de la portion formant appui-tête 4. La portion de l'élément formant tablette 6, située près du premier bord 3 du dossier 1 comporte des cavités 9, servant, par exemple, de support pour une canette de boisson ou un verre.

En référence à la figure 2, lorsque le dossier 1 est replié sur l'assise 2, la face arrière du dossier 1 recouverte de l'élément formant tablette 6 devient une tablette ou plan de travail, disposée entre les deux sièges 10 et 11, situé de part et d'autre du siège selon l'invention, et orientés de la même manière que ce dernier. Le plateau tournant 8 peut être pivoté soit vers le conducteur, comme c'est le cas sur la figure 2, soit vers le passager, par rotation autour de l'axe X. La position de l'axe X de rotation, qui est dans le présent mode de réalisation, placé sur l'axe longitudinal Z du dossier 1, permet d'obtenir un débattement symétrique de part et d'autre du dossier 1, assurant de part et d'autre, la même surface de travail supplémentaire. La dimension du plateau tournant 8 ainsi que celle de la face arrière 6 du dossier 1 permettent, par rotation du plateau tournant 8, de faire dépasser une portion de ce dernier au-delà de la face arrière et latéralement à cette dernière, ce qui crée une surface de travail supplémentaire, située tout à proximité d'un utilisateur assis sur un siège mitoyen au siège de l'invention, et idéalement orientée.

Selon un autre mode de réalisation non représenté, l'axe de rotation X est placé en dehors de l'axe longitudinal Z du dossier, ce qui crée un débattement dissymétrique du plateau, permettant d'améliorer l'ergonomie de travail d'un utilisateur assis du côté où le débattement est le plus important, au détriment d'un utilisateur assis du côté opposé.

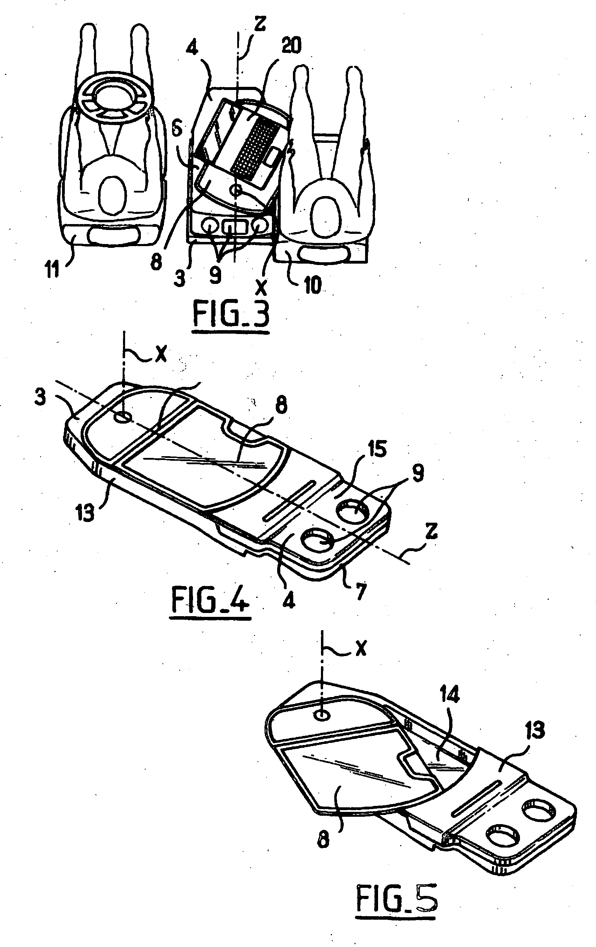

Les éléments du second mode de réalisation, représenté sur les figures 3 à 6, qui sont en commun avec les éléments du premier mode de réalisation précité sont référencés à l'identique.

Dans le second mode de réalisation représenté sur la figure 3, l'axe de rotation X du plateau tournant 8 est disposé sur l'axe longitudinal Z du dossier 1, mais vers le premier bord 3 du dossier 1, c'est-à-dire à l'opposé de la position de l'axe de rotation X dans le premier mode de réalisation. Cette position permet également un grand débattement du plateau tournant 8. Sur la figure 3, le plateau tournant 8 est pivoté vers le passager assis à côté.du siège de l'invention, qui est replié. Comme dans le premier mode de réalisation, le pivotement du plateau tournant autour de l'axe X crée une portion de tablette supplémentaire, proche du passager et qui est donc facilement utilisable.

Ainsi, comme représenté sur les figures 2 et 3, les deux modes de réalisation de l'invention permettent de faciliter l'utilisation, par exemple, d'un ordinateur portable 20, posé sur le plateau tournant 8, en rapprochant celui-ci des utilisateurs assis, sur les sièges mitoyens 10 et 11, et en permettant également son orientation, par le pivotement du plateau tournant 8 autour de l'axe X.

La figure 4 représente plus en détail une variante de réalisation d'une partie du dossier correspondant au second mode de réalisation de l'invention. L'élément formant tablette 6 comporte un châssis 13 qui recouvre le bâti du dossier 1 (non représenté) et qui forme donc sa face arrière. Le châssis 13 est une coque rigide qui forme une cavité ou logement de rangement 14, visible sur la figure qui est inséré dans l'épaisseur du coussin du dossier 1. La face ouverte du logement de rangement 14 est recouverte par le plateau tournant 8, lorsque celui-ci est disposé selon l'axe longitudinal Z du dossier 1, comme représenté sur la figure 4. A l'opposé de l'axe de rotation X du plateau tournant 8, se trouve une portion 15, qui est fixe et qui comporte des cavités de rangement 9. Le plateau tournant 8 sert ainsi de couvercle au logement de rangement 14.

Comme représenté sur la figure 5, il est possible de dégager le logement de rangement 14 en pivotant le plateau tournant 8 autour de son axe de rotation X.

Le logement de rangement 14 est seulement accessible par simple pivotement du plateau tournant 8.

Le châssis 13 décrit en référence aux figures 4 et 5 peut être adapté au premier mode de réalisation, la portion de tablette fixe est alors disposée près du premier bord 3 du dossier 1.

## Revendications

1. Siège de véhicule automobile comportant une assise (2), un dossier (1) repliable sur ladite assise (2), qui comporte une face arrière entièrement recouverte d'un élément (6).
la face arrière étant amenée dans une position sensiblement horizontale, lorsque ledit dossier (1) est replié sur ladite assise (2), la face arrière du dossier (1) recouverte de l'élément (6) devenant, dans cette position, une tablette,_
**caractérisé en ce que** ledit élément formant tablette (6) comporte un plateau tournant (8) :
- qui est fixé à plat sur l'élément formant tablette (6) de manière à présenter une face libre,
- qui est monté pivotant sur ladite face arrière dudit dossier, autour d'un unique axe (X), sensiblement perpendiculaire à ladite face arrière (6), ce pivotement constituant l'unique degré de liberté du plateau par rapport au dossier (1), de manière que le plateau puisse être amené dans une position dans laquelle une portion dudit plateau tournant (8) dépasse latéralement de ladite face arrière dudit dossier (1).

2. Siège selon la revendication 1, **caractérisé en ce que** ledit dossier présente un axe longitudinal (Z) et une portion formant appui- tête (4) et **en ce que** ledit axe de rotation (X) dudit plateau tournant est positionné au niveau de ladite zone formant appui-tête (4).

3. Siège selon la revendication 1 , **caractérisé en ce que** ledit dossier (1) présente un premier bord (3) relié à ladite assise et un axe longitudinal (Z) et **en ce que** ledit axe_de rotation (X) dudit plateau tournant (8) intersecte ledit axe longitudinal (Z), à proximité dudit premier bord (3) dudit dossier (1).

4. Siège selon l'une quelconque des revendication 1 à 3, **caractérisé en ce que** ledit élément formant tablette (6) comporte un logement de rangement (14), accessible depuis ladite face arrière dudit dossier (1) et disposé au moins partiellement sous ledit plateau tournant (8).

5. Siège selon la revendication 4, **caractérisé en ce que** ledit logement est disposé de manière à être accessible par rotation dudit plateau tournant (8) autour dudit axe de rotation (X).

6. Siège selon l'une quelconque des revendication 1 à 6, **caractérisé en ce que** ledit dossier comporte un bâti, **en ce que** ledit élément formant tablette (6) comporte un châssis (13), rigide, qui est fixé sur ledit bâti dudit dossier (1) et qui supporte ledit plateau tournant (8).

7. Véhicule automobile comportant une rangée d'au moins deux sièges, **caractérisé en ce qu'**au moins l'un desdits sièges est un siège selon l'une quelconque des revendications 1 à 6.

8. Véhicule selon la revendication 7 **caractérisé en ce que** ladite rangée comporte au moins trois sièges et **en ce que** ledit siège selon l'une quelconque des revendications 1 à 6 est disposé entre deux desdits sièges.

9. Véhicuie automobile selon la revendication 7 ou 8 **caractérisé en ce que** ladite rangée de siège est une rangée de sièges avant ou une rangée de sièges arrière.

## Claims

1. Motor vehicle seat comprising a seat cushion (2), a backrest (1) that can be folded onto said seat cushion (2), which comprises a rear face completely covered with an element (6),
the rear face being brought into a substantially horizontal position when said backrest (1) is folded onto said seat cushion (2), the rear face of the backrest (1), covered with the element (6), becoming, in this position, a tablet,
**characterized in that** said tablet-forming element (6) comprises a turntable (8) :
- which is fixed flat on the tablet-forming element (6) in such a way as to have one free face,
- which is pivot-mounted on said rear face of said backrest about a single axis (X), substantially perpendicular to said rear face (6), this pivoting being the only degree of freedom that the turntable has with respect to the backrest (1), such that the turntable can be brought into a position in which a portion of said turntable (8) protrudes laterally from said rear face of said backrest (1).

2. Seat according to Claim 1, **characterized in that** said backrest has a longitudinal axis (Z) and a headrest-forming portion (4), and **in that** said axis of rotation (X) of said turntable is positioned in the region of said headrest-forming zone (4).

3. Seat according to Claim 1, **characterized in that** said backrest (1) has a first edge (3) connected to said seat cushion and a longitudinal axis (Z), and **in that** said axis of rotation (X) of said turntable (8) intersects said longitudinal axis (Z) near said first edge (3) of said backrest (1).

4. Seat according to any one of Claims 1 to 3, **characterized in that** said tablet-forming element (6) comprises a storage housing (14) accessible from said rear face of said backrest (1) and located at least partially under said turntable (8).

5. Seat according to Claim 4, **characterized in that** said housing is positioned in such a way as to be accessible by rotating said turntable (8) about said axis of rotation (X).

6. Seat according to any one of Claims 1 to 5, **characterized in that** said backrest comprises a frame, **in that** said tablet-forming element (6) comprises a rigid carcass (13) which is fixed to said frame of said backrest (1) and which supports said turntable (8).

7. Motor vehicle comprising a row of at least two seats, **characterized in that** at least one of said seats is a seat according to any one of Claims 1 to 6.

8. Vehicle according to Claim 7, **characterized in that** said row comprises at least three seats and **in that** said seat according to any one of Claims 1 to 6 is positioned between two of said seats.

9. Motor vehicle according to Claim 7 or 8, **characterized in that** said row of seats is a row of front seats or a row of rear seats.

## Patentansprüche

1. Kraftfahrzeugsitz, der eine Sitzfläche (2) und eine auf die Sitzfläche (2) umklappbare Rückenlehne (1) aufweist, die eine vollständig von einem Element (6) bedeckte Rückseite aufweist, wobei die Rückseite in eine im Wesentlichen waagrechte Stellung gebracht wird, wenn die Rückenlehne (1) auf die Sitzfläche (2) umgeklappt wird, wobei die Rückseite der mit dem Element (6) bedeckten Rückenlehne (1) in dieser Stellung zu einem Tisch wird,
**dadurch gekennzeichnet, dass** das einen Tisch formende Element (6) eine Drehplatte (8) enthält,
- die flach auf dem einen Tisch formenden Element (6) befestigt wird, um eine freie Fläche zu präsentieren,
- die auf die Rückseite der Rückenlehne um eine einzige Achse (X) im Wesentlichen lotrecht zur Rückseite schwenkbar montiert wird, wobei dieses Schwenken den einzigen Freiheitsgrad der Platte bezüglich der Rückenlehne (1) bildet, so dass die Platte in eine Stellung gebracht werden kann, in der ein Teil der Drehplatte (8) seitlich über die Rückseite der Rückenlehne (1) übersteht.

2. Sitz nach Anspruch 1, **dadurch gekennzeichnet, dass** die Rückenlehne eine Längsachse (Z) und einen eine Kopfstütze formenden Teil (4) aufweist, und dass die Drehachse (X) der Drehplatte im Bereich der eine Kopfstütze (4) formenden Zone positioniert ist.

3. Sitz nach Anspruch 1, **dadurch gekennzeichnet, dass** die Rückenlehne (1) einen ersten mit der Sitzfläche verbundenen Rand (3) und eine Längsachse (Z) aufweist, und dass die Drehachse (X) der Drehplatte (8) die Längsachse (Z) in der Nähe des ersten Rands (3) der Rückenlehne (1) schneidet.

4. Sitz nach einem der Ansprüche 1 bis 3, **dadurch gekennzeichnet, dass** das einen Tisch formende Element (6) ein Ablagefach (14) aufweist, das von der Rückseite der Rückenlehne (1) zugänglich und zumindest teilweise unter der Drehplatte (8) angeordnet ist.

5. Sitz nach Anspruch 4, **dadurch gekennzeichnet, dass** das Fach so angeordnet ist, dass es durch Drehung der Drehplatte (8) um die Drehachse (X) zugänglich wird.

6. Sitz nach einem der Ansprüche 1 bis 5, **dadurch gekennzeichnet, dass** die Rückenlehne einen Rahmen aufweist, dass das einen Tisch formende Element (6) ein steifes Gestell (13) aufweist, das an dem Rahmen der Rückenlehne (1) befestigt ist und die Drehplatte (8) trägt.

7. Kraftfahrzeug, das eine Reihe von mindestens zwei Sitzen aufweist, **dadurch gekennzeichnet, dass** mindestens einer der Sitze ein Sitz nach einem der Ansprüche 1 bis 6 ist.

8. Fahrzeug nach Anspruch 7, **dadurch gekennzeichnet, dass** die Reihe mindestens drei Sitze aufweist, und dass der Sitz nach einem der Ansprüche 1 bis 6 zwischen zwei Sitzen angeordnet ist.

9. Kraftfahrzeug nach Anspruch 7 oder 8, **dadurch gekennzeichnet, dass** die Sitzreihe eine vordere Sitzreihe oder eine hintere Sitzreihe ist.
